# EUROPEAN PATENT SPECIFICATION

(11) **EP 4 672 822 B1**
(45) Date of publication and mention of the grant of the patent: **05.08.2026**
(21) Application number: 24185423.1
(22) Date of filing: 28.06.2024
(51) Int. Cl.: H04W 48/10, H04W 48/12, H04W 48/18, H04W 88/06

(54) **METHOD OF OPERATING A TELECOMMUNICATIONS NETWORK**
VERFAHREN ZUM BETRIEB EINES TELEKOMMUNIKATIONSNETZES
PROCÉDÉ D'EXPLOITATION D'UN RÉSEAU DE TÉLÉCOMMUNICATIONS

(43) Date of publication of application: 31.12.2025
(73) Proprietor: British Telecommunications public limited company, London E1 8EE (GB)
(72) Inventor: LALOVIC, Milan, London, E1 8EE (GB); KUMAR, Parveen, London, E1 8EE (GB)
(74) Representative: British Telecommunications public limited company Intellectual Property Department

(56) References cited:
- US-A1- 2021 099 924
- US-A1- 2021 219 226
- US-A1- 2022 201 592
- US-A1- 2022 225 272
- US-A1- 2023 345 351

## Description

### Field of Invention

The present invention relates to cellular telecommunications networks.

### Background

Private cellular networks are a mobile network that function similar to a public cellular network, but that allow the operator to provide restricted access and use licensed or unlicensed wireless spectrum. In 3GPP terminology a private cellular network is also referred to as a "Non-Public Network" (NPN).

Exemplary NPN are disclosed in US 2022/201592 A1, US 2021/099924 A1, US 2021/219226 A1, US 2023/345351 A1 and US 2022/225272 A1.

At one level, access to a private network is restricted by connection rules imposing that User Equipment (UE) stores, within a corresponding Subscriber Identity Module (SIM), a network identifier that matches a corresponding network identifier advertised by the private network; where this is not the case, the UE does not typically *(i.e.* under conventional 3GPP-based processing) attempt to connect to the private network.

Where instead there is a match between the network identifier stored in the SIM and advertised by the private network, the UE will attempt to connect to the private network. Once the UE is connected to the private network, any subsequent change in the network identifier for the private network typically results in the UE disconnecting from the private network, and the UE then scanning for another cellular network.

However, a problem may arise if the SIM is not reconfigured with the new network identifier of the private network, in which case the UE is effectively locked out of the private network whilst the network identifier stored in the SIM does not match the network identifier used by the private network.

This lock-out can be resolved by issuing, whilst the UE is connected to the private network, a "RRC Reconfiguration" message to update the stored network identifier in the SIM to the new network identifier used by the private network, or by replacing the SIM with another SIM having stored within the new network identifier; however, these solutions may require significant signalling and processing overhead by the private network, UE and/or by a user of the UE, and are therefore deficient.

It is an aim of the present invention to alleviate at least some of the aforementioned problems.

### Statements of Invention

According to a first aspect of the present invention, there is provided: a method of operating a cellular telecommunications system, said system comprising User Equipment, UE, and a cellular private network, and the method comprising the steps of: storing, at the UE and at the private network, a: Static IDentifier, SID; and first Network IDentifier, NID, for uniquely identifying the private network to the UE, wherein the first NID comprises the SID; by the private network: broadcasting the first NID; modifying the first NID into a second, different, NID for uniquely identifying the private network, wherein the second NID is unfamiliar to the UE for the purposes of permitting the UE to request a connection to the private network on the basis of the second NID, and in which the second NID comprises: the SID, wherein the SID remains unchanged as between the first and second NIDs; and a Variable IDentifier, VID, consisting of at least one character that is different to a corresponding portion of the first NID; and subsequently broadcasting the second NID instead of the first NID, thereby instead to identify the private network using the second NID; by the UE: detecting the broadcast second NID; determining, using the SID, that the detected second NID comprises the SID; and requesting, in response to determining that the broadcast second NID comprises the SID, attachment to the private network using the SID, despite the second NID being unfamiliar to the UE.

As used herein, the second NID being unfamiliar to the UE preferably connotes said NID being absent from a SIM (or a similar secure identity module, including an eSIM) of the UE, and/or is untrusted by the UE, such as to prevent the UE from requesting, on the basis of the unfamiliar second NID as a whole, a connection to a network utilising the second NID, whilst said second NID remains unfamiliar to the UE. Preferably, the first and the second NIDs comprise a PLMN of a parent public network of the private network. Preferably, the SID remains unchanged as to content, or content and position, within the first and second NIDs. Preferably, requesting attachment to the private network is performed by disregarding the VID. Preferably, the method further comprises the steps of connecting the UE to the private network whilst said network is broadcasting the first NID; and disconnecting, by the UE, the UE from the private network in response to the UE detecting the broadcast second NID. Optionally, the method further comprises the step of providing the UE in a disconnected state from the private network whilst said network is broadcasting the first NID.

Optionally, the method further comprises the step of: additionally, or alternatively, modifying the first NID into a third, different, NID for uniquely identifying the private network, wherein the third NID is unfamiliar to the UE and in which the SID is entirely absent from the third NID; subsequently broadcasting the third NID by the private network; and wherein, in response to the UE detecting the broadcast NID, and then determining that the SID is entirely absent from said detected NID, the UE preventing a issuance of a request to connect to the private network.

According to another aspect of the invention, there is provided a method of operating User Equipment, UE, within a cellular telecommunications system, said system comprising a cellular private network, and the method comprising the steps of: storing, at the UE, a: Static IDentifier, SID; and first Network IDentifier, NID, for uniquely identifying the private network to the UE, wherein the first NID comprises the SID; detecting, by the UE, a second NID, as broadcast by the private network, in which the second NID is for uniquely identifying the private network, is the result of a modification of the first NID, and wherein the second NID is unfamiliar to the UE for the purposes of permitting the UE to request a connection to the private network on the basis of the second NID, and in which the second NID comprises: the SID, wherein the SID remains unchanged as between the first and second NIDs; and a Variable IDentifier, VID, consisting of at least one character that is different to a corresponding portion of the first NID; and determining, using the SID, that the detected second NID comprises the SID; and requesting, in response to determining that the broadcast second NID comprises the SID, attachment to the private network using the SID, despite the second NID being unfamiliar to the UE.

According to yet another aspect of the invention, there is provided a method of operating a private cellular network within a cellular telecommunications system, said system comprising User Equipment, UE, and the method comprising the steps of: storing, at the private network, a: Static IDentifier, SID, known also to the UE; and first Network IDentifier, NID, for uniquely identifying the private network to the UE, wherein the first NID comprises the SID; broadcasting the first NID; modifying the first NID into a second, different, NID for uniquely identifying the private network, wherein the second NID is unfamiliar to the UE for the purposes of permitting the UE to request a connection to the private network on the basis of the second NID, and in which the second NID comprises: the SID, wherein the SID remains unchanged as between the first and second NIDs; and a Variable IDentifier, VID, consisting of at least one character that is different to a corresponding portion of the first NID; and subsequently broadcasting the second NID instead of the first NID, thereby instead to identify the private network using the second NID.

Preferably, the method further comprises the step of: prior to modifying the first NID, the private network determining a performance characteristic of the private network, wherein modifying the first NID into a second NID comprises encoding said performance characteristic within the VID.

Preferably, the method further comprises the step of: decoding, by the UE, the encoded performance characteristic from the VID thereby to identify the performance characteristic, wherein the UE requesting attachment to the private network is further performed in response to the UE identifying that the performance characteristic exceeds a predetermined threshold.

Preferably, the the decoding is performed using a cipher stored within a SIM of the UE. Optionally, the first NID and SID are stored within the SIM, but not the second NID (optionally, at least, prior to requesting, and then establishing, a connection to the private network whilst said network is using the second NID).

Preferably, the performance characteristic comprises at least one of: bandwidth; latency, QoS, jitter, guest services, roaming terms, and service level assurances.

Preferably, the private network is a Standalone Non-Public Network, a Non-Standalone Non-Public Network or a Public Network Integrated Non-Public Network.

Preferably, the method further comprises the steps of: subsequent to requesting attachment, the UE establishing a connection with the private network; and instructing, by the private network, the UE to replace the: stored first NID with the second NID; stored SID with a different SID that is also stored by the private network.

Preferably, the VID further comprises a flag for triggering the UE to perform the step of determining, using the SID, that the detected second NID comprises the SID. Optionally, absent said flag the UE is configured not to perform said step.

According to still another aspect of the invention, there is provided a computer-readable carrier medium comprising a computer program, which, when the computer program is executed by a computer, causes the computer to carry out the steps of any one of the methods described above.

According to a further aspect of the invention, there is provided a cellular telecommunications system comprising a: cellular private network; and User Equipment, UE; wherein the private network is configured to: broadcast a first Network IDentifier, NID, for uniquely identifying the private network to the UE; modify the first NID into a second, different, NID for uniquely identifying the private network, wherein the second NID is unfamiliar to the UE for the purposes of permitting the UE to request a connection to the private network on the basis of the second NID, and in which the second NID comprises a: Static IDentifier, SID, that is unchanged as between the first and second NIDs; and Variable IDentifier, VID, consisting of at least one character field that is different to a corresponding portion of the first NID; and subsequently broadcast the second NID instead of the first NID, thereby instead to identify the private network using the second NID; and User Equipment, UE, comprising: memory storing: the first NID, thereby to identify and perform attachment to the private network when said network is broadcasting the first NID; and the SID; and a controller configured to: detect the broadcast second NID; determine, using the stored SID, that the detected second NID comprises the SID; and request, in response to determining that the broadcast second NID comprises the SID, attachment to the private network using the stored SID.

According to a further aspect of the invention, there is provided a User Equipment, UE, for operating within a cellular telecommunications system comprising a cellular private network, the UE comprising: memory storing a: Static IDentifier, SID; and first Network IDentifier, NID, for uniquely identifying the private network to the UE, wherein the first NID comprises the SID; a controller configured to: detect, by the UE, a second NID, as broadcast by the private network, in which the second NID is for uniquely identifying the private network, is the result of a modification of the first NID by the private network, and wherein the second NID is unfamiliar to the UE for the purposes of permitting the UE to request a connection to the private network on the basis of the second NID, and in which the second NID comprises: the SID, wherein the SID remains unchanged as between the first and second NIDs; and a Variable IDentifier, VID, consisting of at least one character that is different to a corresponding portion of the first NID; and determine, using the SID, that the detected second NID comprises the SID; and request, in response to determining that the broadcast second NID comprises the SID, attachment to the private network using the SID, despite the second NID being unfamiliar to the UE.

According to a further aspect of the invention, there is provided a private cellular network for operating within a cellular telecommunications system, said system comprising User Equipment, UE, and the private network comprising: memory storing a: Static IDentifier, SID, known also to the UE; and first Network IDentifier, NID, for uniquely identifying the private network to the UE, wherein the first NID comprises the SID; transceiver configured to: broadcast the first NID; controller configured to: modify the first NID into a second, different, NID for uniquely identifying the private network, wherein the second NID is unfamiliar to the UE for the purposes of permitting the UE to request a connection to the private network on the basis of the second NID, and in which the second NID comprises: the SID, wherein the SID remains unchanged as between the first and second NIDs; and a Variable IDentifier, VID, consisting of at least one character that is different to a corresponding portion of the first NID; and wherein the transceiver is configured subsequently to broadcast the second NID instead of the first NID, thereby instead to identify the private network using the second NID.

The above summary is not intended to describe each illustrated embodiment or every implementation of the subject matter hereof. The invention includes any novel aspects described and/or illustrated herein. The invention also extends to methods and/or apparatus substantially as herein described and/or as illustrated with reference to the accompanying drawings. The invention is also provided as a computer program and/or a computer program product for carrying out any of the methods described herein and/or for embodying any of the apparatus features described herein, and a computer-readable medium storing thereon a program for carrying out any of the methods and/or for embodying any of the apparatus features described herein. Features described as being implemented in hardware may alternatively be implemented in software, and vice versa.

It should be understood that the individual operations used in the methods of the present teachings may be performed in any order and/or simultaneously, as long as the teaching remains operable. Furthermore, it should be understood that the apparatus and methods of the present teachings can include any number, or all, of the described embodiments, as long as the teaching remains operable.

Any apparatus feature may also be provided as a corresponding step of a method, and vice versa. As used herein, means plus function features may alternatively be expressed in terms of their corresponding structure, for example as a suitably-programmed processor.

Any feature in one aspect of the invention may be applied, in any appropriate combination, to other aspects of the invention. Any, some and/or all features in one aspect can be applied to any, some and/or all features in any other aspect, in any appropriate combination. Particular combinations of the various features described and defined in any aspects of the invention can be implemented and/or supplied and/or used independently.

As used throughout, the word 'or' can be interpreted in the exclusive and/or inclusive sense, unless otherwise specified.

The invention extends to methods of operating a cellular telecommunications system, a private network and User Equipment (UE), along with a cellular telecommunications system, private network and UE therefor, as described herein and/or substantially as illustrated with reference to the accompanying drawings. The present invention is now described, purely by way of example, with reference to the accompanying diagrammatic drawings, in which:
Figure 1 shows a cellular telecommunications system comprising User Equipment (UE);
Figure 2 shows the UE in detail; and
Figure 3 shows a process for operating the cellular telecommunications system.

While various embodiments are amenable to various modifications and alternative forms, specifics thereof have been shown by way of example in the drawings and will be described in detail. It should be understood, however, that the intention is not to limit the claimed inventions to the particular embodiments described. On the contrary, the intention is to cover all modifications, and alternatives falling within the scope of the subject matter as defined by the claims.

### Specific Description

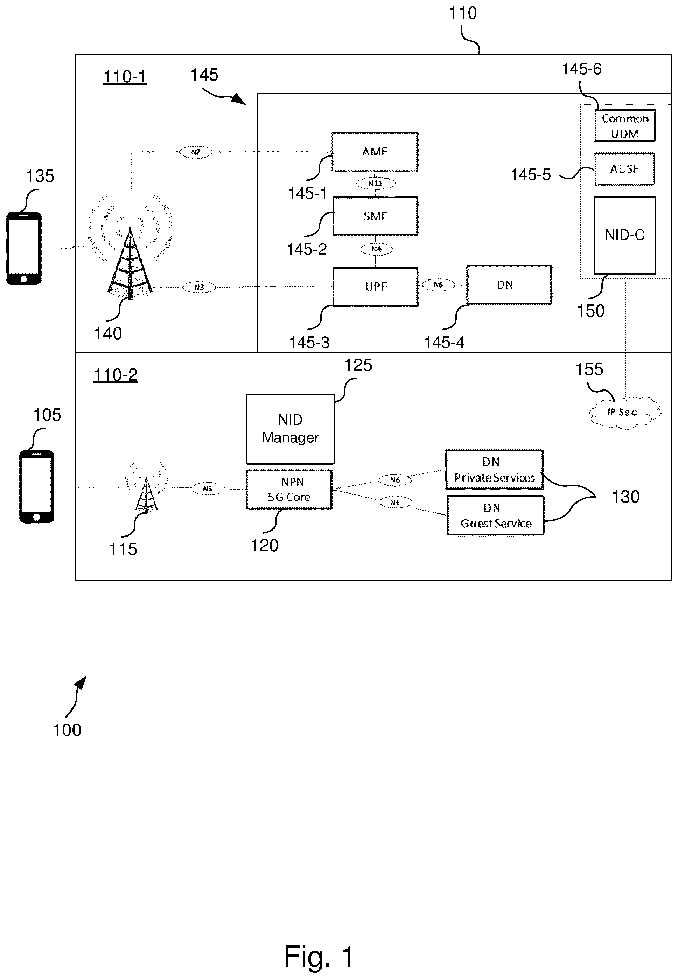

Figure 1 is a schematic diagram of a cellular telecommunications system 100, comprising User Equipment (UE) 105 and a cellular telecommunications network 110.

In turn, the cellular telecommunications network 110 comprises a public cellular telecommunications network (herein, the *"public network*") 110-1 and a private cellular telecommunications network (also referred to as a Non-Public Network (NPN), and herein the "*private network*") 110-2.

The private network 110-2 is accessible by the UE 105 that is a subscriber of said network, and said network further comprises a: private Radio Access Network (RAN) 115; Non-Public Network (NPN) 5G Core 120; Network IDentifier Manager (NID-M) 125; and Data Network (DN) for private and guest services 130.

The public network 110-1 is accessible by a further UE 135 that is a subscriber of the public network, and said network further comprises a public RAN 140 and a public core 145. The public core in turn comprises, at least, the following network components:
- Access Management Function (AMF) 145-1;
- Session Management Function (SMF) 145-2;
- User Plane Function (UPF) 145-3;
- Data Network (DN) 145-4;
- Authentication Server Function (AUSF) 145-5; and
- Common Unified Data Management (UDM) 145-6.

The public network 110-1 is operated as, for example, a 5G cellular network, for example as per standards defined by the 3GPP. The public core 145 further comprises a Network IDentifier Controller (NID-C) 150.

The public network 110-1 is identifiable by the further UE 135 (and other subscribers) by a network identifier in the form of a Public Land Mobile Network (PLMN) code.

The public network 110-1 is configured as the parent network of the private network 110-2, such that certain of the aforementioned network components (such as the AUSF 145-5 and the UDM 145-6) of the public core serve both the public network and the private network. The NID-C 150 serves the NID-M 125 via an IP Sec tunnel 155 established therebetween. The NID-C further interfaces with the AMF 145-1.

The private network 110-2 is identifiable by the UE 105 (and other subscribers) by a Network IDentifier (NID). The NID comprises the PLMN code of the (parent) public network 110-1 and a NID value; this corresponds to 3GPP Technical Specification 23.501 (Version 18.5.0). According to current 5G standards, the NID value comprises 11 hexadecimal digits.

The NID value is allocated by the NID-C 150, which centrally assigns NID values to the, and any related, private networks (*e.g.* to prevent conflict and duplication). The NID-C is further configured to communicate an allocated NID value to the NID-M 125 via the IP Sec tunnel 155. Upon receipt of the NID value, the NID-M instructs the NPN 5G Core 120 to adopt the NID value as part of the NID of private network, which is subsequently broadcast by the private RAN 115.

The NID, and specifically the NID value, for the private network 110-1 is available to be changed, for example: as part of network restructuring, in particular to prevent conflict with other private networks; as part of a security upgrade, such as to force the UE to re-connect to the private network; and/or to use the NID to encode additional dynamic information for communicating to the UE, such as to advertise network performance and/or networking capabilities of the private network.

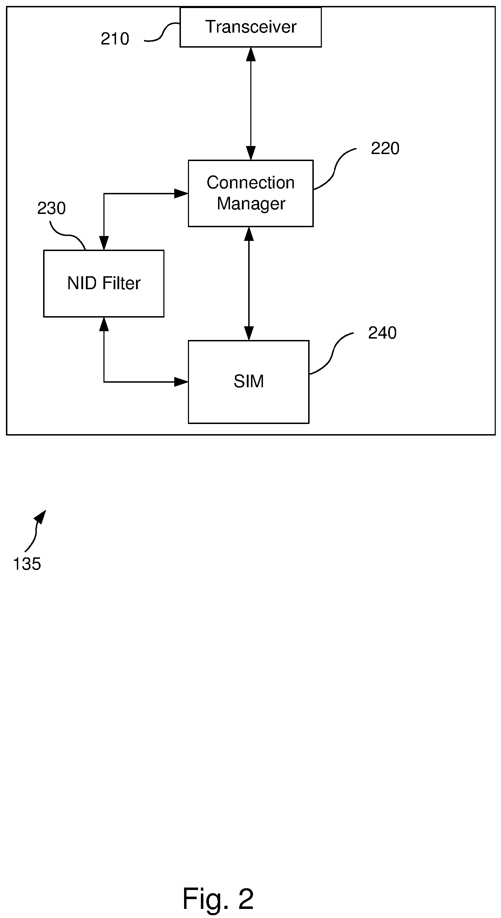

Figure 2 is a schematic diagram of the UE 105, which comprises a: transceiver 210; Connection Manager 220; NID Filter (NID-F) 230; and Subscriber Identity Module (SIM) 240. It will be appreciated that the UE comprises other components for rendering the UE capable of communicating with the private network; these have been omitted for conciseness and will be known to the person skilled in the art of cellular telecommunications.

The transceiver 210 is in the form of radio communication equipment for communicating with the private RAN 115, including for detecting network advertisements, and in particular a NID broadcast by the private network (herein, the "*broadcast NID*"). The transceiver is in turn in communication with the Connection Manager 220.

The Connection Manager 220 is configured to control access by the UE 105 to the private network 110-2. Specifically, the Connection Manager is configured to monitor for advertisements by the private network, and to request a connection to the private network. To do so, the Connection Manager retrieves, from the SIM 240, a NID that is stored therewithin (herein, the "*stored NID*"), and the broadcast NID received from the transceiver 210. In turn, the Connection Manager is configured to compare the broadcast and the stored NIDs, and in response to identifying that the said NIDs match, the Connection Manager causes, by appropriate operation of the transceiver, a request to connect to the private network. However, where a broadcast NID does not match the stored NID, the Connection Manager takes a default action of prevents issuance of a request for connecting to a cellular network using the unfamiliar (to the UE 105) broadcast NID.

The NID-F 230 provides functionality to the UE that - with co-operation from the telecommunications network 110 - helps prevent lock-out of the UE from the private network 110-2.

To do so, the NID-F 230 stores a pre-defined partial NID value *(i.e.* fewer than the 11 hexadecimal digits of a typical NID value) that is identical to a corresponding portion of the stored NID, said partial NID value is herein referred to as the "*UE Static IDentifier*" (or "*UE SID*")*.* The NID-C 150 also stores, in association with the private network 110-2, the same SID, which is herein referred to as the "*private network SID*".

To help prevent lock-out of the UE 105 when the NID of the private network 110-2 is modified, the private network is operated (specifically, by orchestration from the NID-C 150) to modify only a non-SID portion of the NID; this portion is herein referred to as the "*Variable IDentifier*" (pr "*VID*").

The NID-F 230 is configured to communicate with the Connection Manager 220 and the SIM 240 so as to receive the broadcast NID and the stored NID, respectively. In addition, the NID-F 230 is configured to identify whether the UE SID matches a corresponding portion of both the broadcast NID and the stored NID; if this is true, then the NID-F is configured to override the default action of the Connection Manager to prevent issuance of a connection request to a cellular network broadcasting said NID, and instead the Connection Manager 220 is instructed by the NID-F to request a connection said cellular network.

Table 1 below illustrates four exemplary NID values, and associated constituent SIDs and VIDs.

**Table 1**

| SID | VID | NID Value |
|---|---|---|
| 91FC | C2AA3CD | 91FCC2AA3CD |
| 91FC | C2AA3DC | 91FC C2AA3DC |
| 91FC | C654HJW | 91FCC654HJW |
| 91FC | 232CVSK | 91FC232CVSK |

As shown in table 1, the same SID - "*91FC*" - forms the first four characters of all four NID values, and the remaining (last) seven characters are different for each NID value (*e.g*. "*C2AA3CD*" versus "*232CVSK*").

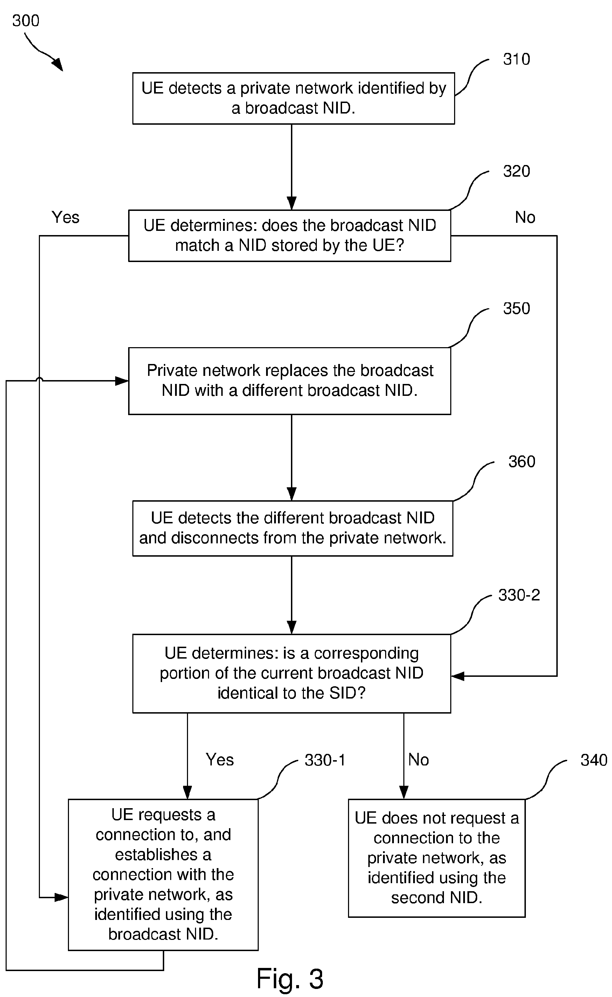

Figure 3 shows a process 300 of operating the telecommunications system 100.

In a first step 310, the UE 105 is disconnected from the private network 110-2, and is actively scanning for a network. Accordingly, the UE detects the private network by way of the broadcast NID of said network.

At a next step 320, the UE 105 determines (by means of the SIM 240 and Connection Manager 220) whether the detected broadcast NID matches the stored NID. If the broadcast NID matches the stored NID, the process 300 proceeds to step 330-1, else to step 330-2.

At step 330-1, the UE 105 requests a connection to the private network 110-2, having identified the private network as a home network given that the broadcast and stored NIDs are identical. For example, processing arrives at step 330-1 where the broadcast and stored NID are both "*91FCC2AA3CD*".

At step 330-2, the UE 105 (by means of the NID-F 230) further determines whether the UE SID matches a corresponding portion of the broadcast and the stored NIDs; if this is true (*e.g.* where the UE SID is "*91FC*", the stored NID value is "*91FCC2AA3CD*" and the broadcast NID value is *"91FCC654HJW'),* then the NID-F instructs the Connection Manager to request a connection to the private network, despite said network using a different, and unfamiliar, NID to the stored NID. Accordingly, process 300 then proceeds to step 330-1, and the UE requests a connection to the private network.

However, if at step 330-2, it is determined by the NID-F 230 that the UE SID does not match the corresponding portion of the broadcast or stored NID (*e.g.* where the UE SID is "*91FC*", the stored NID value is "*91FCC2AA3CD"* and the broadcast NID value is "*58DPC654HJW*"), the process 300 instead proceeds to step 340, in which the NID-F takes no action, and the Connection Manager 220 therefore prevents issuance of a connection request to the private network. After step 340, the UE is available to continue scanning for a network, and the process therefore effectively reiterates (not shown in Figure 3) to step 310.

After the process arrives at step 330-1, directly by way of step 320 or step 330-2, the process 300 proceeds to step 350, in which the NID-C 150 instructs the NID-M 125 to replace the broadcast NID, on which basis the UE 105 is connected (following preceding step 330-1), with a different broadcast NID; accordingly, the private network 110-2 adopts and broadcasts said different NID. This modification of the NID occurs in one of two ways. To reduce the risk of lock-out of the UE 105, the NID-C 150 identifies the private network SID associated with the private network 110-2 and, at step 350, when generating the different broadcast NID, and modifies only the VID without modifying the private network SID (*e.g.* from *"91FCC2AA3CD"* to "*91FC232CVSK*"); this is herein referred to as a "*non-lock-out change*" scenario. Alternatively, the NID-C modifies, at least, the SID portion when generating the different broadcast NID (*e.g.* from "*91FCC2AA3CD*" to "*91D5232CVSK*"); this is herein referred to as a "*lock-out change*" scenario.

At a next step 360, the UE 105 detects that the currently broadcast NID (*e.g.* "*91FC232CVSK*") for the private network 110-2 is now different to that detected in preceding step 310 and also does not match the stored NID (e.g. *"91FCC2AA3CD*")*,* the Connection Manager 220 therefore disconnects the UE from the private network, on this basis.

After disconnection at step 360, the process proceeds to step 330-2, the UE 105 determines whether there is a "*non-lock-out change*" scenario (*i.e.* the UE SID is correspondingly comprised within the different broadcast NID and the stored NID); if so, then the NID-F 230 instructs the Connection Manager 220 to request a connection to the private network 110-2 whilst said network is using the different broadcast NID. Accordingly, the process 300 proceeds to step 330-1, and the UE requests a connection to the private network.

If, however, there is a "*lock-out change*" scenario (*i.e.* the UE SID is not correspondingly comprised within the broadcast different NID and the stored NID), then the process 300 instead advances to step 340, and the UE does not request a connection to the private network 110-2, as described above.

The UE SID is available to be updated by the private network (*e.g.* via an over-the-air communication) and/or by manual user operation of the UE in response to the NID-C changing the private network SID.

### Alternatives and Modifications

In the preceding description, the SID is described as a pre-defined set of characters having a static relative position within the NID value (*e.g.* the first four characters). In an alternative, the SID is a pre-defined set of characters that can appear at any location within the NID value. In yet a further alternative, the SID is derived from a predefined function applied to the NID, such as a checksum, XOR, or code-spreading function.

In an alternative, the VID comprises a flag value that is recognised by the UE 105 and causes said UE to trigger operation of step 330-2, having disconnected from the private network 110-2 in immediately preceding step 360.

As described above, a NID value is available to be modified (by the NID-C 150) so as to encode performance characteristics of the private network 110-2. In an alternative, at step 350 the NID-C encodes an indication of network performance of the private network within the VID, and at subsequent step 330-1, the UE 105 requests a connection to the private network upon decoding, from the VID, the performance characteristics and determining that the associated performance of the private network is sufficient (based on an associated threshold stored within the UE).

In an alternative, the private network is configured as a Standalone Non-Public Network (SNPN) or a Public Network Integrated Non-Public Network (PNI-NPN), such that core components described above as being provided by the public network (*e.g.* the NID-C, AMD, *etc*.) are instead provided within the NPN 5G Core (which is therefore known as a SNPN or PNI-NPN 5G Core).

In one embodiment, the system and/or its components or subsystems can include computing devices, microprocessors, modules and other computer or computing devices, which can be any programmable device that accepts digital data as input, is configured to process the input according to instructions or algorithms, and provides results as outputs. In one embodiment, computing and other such devices discussed herein can be, comprise, contain or be coupled to a Central Processing Unit (CPU) configured to carry out the instructions of a computer program. Computing and other such devices discussed herein are therefore configured to perform basic arithmetical, logical, and input/output operations.

Computing and other devices discussed herein can include memory. Memory can comprise volatile or non-volatile memory as required by the coupled computing device or processor to not only provide space to execute the instructions or algorithms, but to provide the space to store the instructions themselves. In one embodiment, volatile memory can include random access memory (RAM), dynamic random-access memory (DRAM), or static random access memory (SRAM), for example. In one embodiment, non-volatile memory can include read-only memory, flash memory, ferroelectric RAM, hard disk, floppy disk, magnetic tape, or optical disc storage, for example. The foregoing lists in no way limit the type of memory that can be used, as these embodiments are given only by way of example and are not intended to limit the scope of the disclosure.

In one embodiment, the system or components thereof can comprise or include various modules or engines, each of which is constructed, programmed, configured, or otherwise adapted to autonomously carry out a function or set of functions. The term "engine" as used herein is defined as a real-world device, component, or arrangement of components implemented using hardware, such as by an application specific integrated circuit (ASIC) or field programmable gate array (FPGA), for example, or as a combination of hardware and software, such as by a microprocessor system and a set of program instructions that adapt the engine to implement the particular functionality, which (while being executed) transform the microprocessor system into a special-purpose device. An engine can also be implemented as a combination of the two, with certain functions facilitated by hardware alone, and other functions facilitated by a combination of hardware and software. In certain implementations, at least a portion, and in some cases, all, of an engine can be executed on the processor(s) of one or more computing platforms that are made up of hardware (e.g., one or more processors, data storage devices such as memory or drive storage, input/output facilities such as network interface devices, video devices, keyboard, mouse or touchscreen devices, etc.) that execute an operating system, system programs, and application programs, while also implementing the engine using multitasking, multithreading, distributed (e.g., cluster, peer-peer, cloud, etc.) processing where appropriate, or other such techniques. Accordingly, each engine can be realized in a variety of physically realizable configurations, and should generally not be limited to any particular implementation exemplified herein, unless such limitations are expressly called out. In addition, an engine can itself be composed of more than one sub-engines, each of which can be regarded as an engine in its own right. Moreover, in the embodiments described herein, each of the various engines corresponds to a defined autonomous functionality; however, it should be understood that in other contemplated embodiments, each functionality can be distributed to more than one engine. Likewise, in other contemplated embodiments, multiple defined functionalities may be implemented by a single engine that performs those multiple functions, possibly alongside other functions, or distributed differently among a set of engines than specifically illustrated in the examples herein.

Various embodiments of systems, devices, and methods have been described herein. These embodiments are given only by way of example and are not intended to limit the scope of the claimed inventions. It should be appreciated, moreover, that the various features of the embodiments that have been described may be combined in various ways to produce numerous additional embodiments. Moreover, while various materials, dimensions, shapes, configurations and locations, etc. have been described for use with disclosed embodiments, others besides those disclosed may be utilized without exceeding the scope of the claimed inventions. Persons of ordinary skill in the relevant arts will recognise that embodiments may comprise fewer features than illustrated in any individual embodiment described above. The embodiments described herein are not meant to be an exhaustive presentation of the ways in which the various features may be combined. Accordingly, the embodiments are not mutually exclusive combinations of features; rather, embodiments can comprise a combination of different individual features selected from different individual embodiments, as understood by persons of ordinary skill in the art. Moreover, elements described with respect to one embodiment can be implemented in other embodiments even when not described in such embodiments unless otherwise noted. Although a dependent claim may refer in the claims to a specific combination with one or more other claims, other embodiments can also include a combination of the dependent claim with the subject matter of each other dependent claim or a combination of one or more features with other dependent or independent claims. Such combinations are proposed herein unless it is stated that a specific combination is not intended. Furthermore, it is intended also to include features of a claim in any other independent claim even if this claim is not directly made dependent to the independent claim.

Moreover, reference in the specification to "one embodiment," "an embodiment," or "some embodiments" means that a particular feature, structure, or characteristic, described in connection with the embodiment, is included in at least one embodiment of the teaching. The appearances of the phrase "in one embodiment" in various places in the specification are not necessarily all referring to the same embodiment.

Each feature disclosed herein, and (where appropriate) as part of the claims and drawings may be provided independently or in any appropriate combination.

Any reference numerals appearing in the claims are for illustration only and shall not limit the scope of the claims.

## Claims

1. A method (300) of operating a cellular telecommunications system (100), said system comprising User Equipment (105), UE, and a cellular private network (110-2), and the method comprising the steps of:
storing, at the UE and at the private network, a:
Static IDentifier, SID; and
first Network IDentifier, NID, for uniquely identifying the private network to the UE,
wherein the first NID comprises the SID; by the private network:
broadcasting the first NID;
modifying the first NID into a second, different, NID for uniquely identifying the private network (350), wherein the second NID is unfamiliar to the UE for the purposes of permitting the UE to request a connection to the private network on the basis of the second NID, and in which the second NID comprises:
the SID, wherein the SID remains unchanged as between the first and second NIDs; and
a Variable IDentifier, VID, consisting of at least one character that is different to a corresponding portion of the first NID; and
subsequently broadcasting the second NID instead of the first NID, thereby instead to identify the private network using the second NID;
by the UE:
detecting the broadcast second NID (360);
determining, using the SID, that the detected second NID comprises the SID (330-2); and
requesting, in response to determining that the broadcast second NID comprises the SID, attachment to the private network using the SID, despite the second NID being unfamiliar to the UE (330-1).

2. A method of operating User Equipment (105), UE, within a cellular telecommunications system (100), said system comprising a cellular private network (110-2), and the method comprising the steps of:
storing, at the UE, a:
Static IDentifier, SID; and
first Network IDentifier, NID, for uniquely identifying the private network to the UE, wherein the first NID comprises the SID;
detecting, by the UE, a second NID, as broadcast by the private network, in which the second NID is for uniquely identifying the private network, is the result of a modification of the first NID, and wherein the second NID is unfamiliar to the UE for the purposes of permitting the UE to request a connection to the private network on the basis of the second NID, and in which the second NID comprises:
the SID, wherein the SID remains unchanged as between the first and second NIDs; and
a Variable IDentifier, VID, consisting of at least one character that is different to a corresponding portion of the first NID; and
determining, using the SID, that the detected second NID comprises the SID (330-2); and
requesting, in response to determining that the broadcast second NID comprises the SID, attachment to the private network using the SID, despite the second NID being unfamiliar to the UE (330-1).

3. A method of operating a private cellular network (110-2) within a cellular telecommunications system (100), said system comprising User Equipment (105), UE, and the method comprising the steps of:
storing, at the private network, a:
Static IDentifier, SID, known also to the UE; and
first Network IDentifier, NID, for uniquely identifying the private network to the UE, wherein the first NID comprises the SID;
broadcasting the first NID;
modifying the first NID into a second, different, NID for uniquely identifying the private network (350), wherein the second NID is unfamiliar to the UE for the purposes of permitting the UE to request a connection to the private network on the basis of the second NID, and in which the second NID comprises:
the SID, wherein the SID remains unchanged as between the first and second NIDs; and
a Variable IDentifier, VID, consisting of at least one character that is different to a corresponding portion of the first NID; and
subsequently broadcasting the second NID instead of the first NID, thereby instead to identify the private network using the second NID.

4. A method according to any preceding claim, further comprising the step of:
prior to modifying the first NID, the private network (110-2) determining a performance characteristic of the private network, wherein modifying the first NID into a second NID comprises encoding said performance characteristic within the VID.

5. A method according to Claim 4, when dependent upon Claim 1 or 2, further comprising the step of:
decoding, by the UE (105), the encoded performance characteristic from the VID thereby to identify the performance characteristic, wherein the UE requesting attachment to the private network is further performed in response to the UE identifying that the performance characteristic exceeds a predetermined threshold.

6. A method according to Claim 5, wherein the decoding is performed using a cipher stored within a SIM of the UE (105).

7. A method according to any of Claims 4 to 6, wherein the performance characteristic comprises at least one of: bandwidth; latency, QoS, jitter, guest services, roaming terms, and service level assurances.

8. A method according to any preceding claim, wherein the private network is a Standalone Non-Public Network, a Non-Standalone Non-Public Network or a Public Network Integrated Non-Public Network.

9. A method according to any preceding claim, further comprising the steps of:
subsequent to requesting attachment, the UE (105) establishing a connection with the private network (110-2); and
instructing, by the private network, the UE to replace the:
stored first NID with the second NID;
stored SID with a different SID that is also stored by the private network.

10. A method according to any preceding claim, wherein the VID further comprises a flag for triggering the UE (105) to perform the step of determining, using the SID, that the detected second NID comprises the SID (330-2).

11. A computer-readable carrier medium comprising a computer program, which, when the computer program is executed by a computer, causes the computer to carry out the steps of any one of the preceding claims.

12. A cellular telecommunications system (100) comprising a:
cellular private network (110-2); and
User Equipment (105), UE;
wherein the private network is configured to:
broadcast a first Network IDentifier, NID, for uniquely identifying the private network to the UE;
modify the first NID into a second, different, NID for uniquely identifying the private network (350), wherein the second NID is unfamiliar to the UE for the purposes of permitting the UE to request a connection to the private network on the basis of the second NID, and in which the second NID comprises a:
Static IDentifier, SID, that is unchanged as between the first and second NIDs; and
Variable IDentifier, VID, consisting of at least one character field that is different to a corresponding portion of the first NID; and
subsequently broadcast the second NID instead of the first NID, thereby instead to identify the private network using the second NID; and
User Equipment, UE, comprising:
memory storing:
the first NID, thereby to identify and perform attachment to the private network when said network is broadcasting the first NID; and
the SID; and
a controller configured to:
detect the broadcast second NID;
determine, using the stored SID, that the detected second NID comprises the SID (330-2); and
request, in response to determining that the broadcast second NID comprises the SID, attachment to the private network using the stored SID (330-1).

13. User Equipment (105), UE, for operating within a cellular telecommunications system (100) comprising a cellular private network (110-2), the UE comprising:
memory storing a:
Static IDentifier, SID; and
first Network IDentifier, NID, for uniquely identifying the private network to the UE, wherein the first NID comprises the SID;
a controller configured to:
detect, by the UE, a second NID, as broadcast by the private network, in which the second NID is for uniquely identifying the private network, is the result of a modification of the first NID by the private network, and wherein the second NID is unfamiliar to the UE for the purposes of permitting the UE to request a connection to the private network on the basis of the second NID, and in which the second NID comprises:
the SID, wherein the SID remains unchanged as between the first and second NIDs; and
a Variable IDentifier, VID, consisting of at least one character that is different to a corresponding portion of the first NID; and
determine, using the SID, that the detected second NID comprises the SID (330-2); and
request, in response to determining that the broadcast second NID comprises the SID, attachment to the private network using the SID, despite the second NID being unfamiliar to the UE (330-1).

14. A private cellular network (110-2) for operating within a cellular telecommunications system (100), said system comprising User Equipment (105), UE, and the private network comprising:
memory storing a:
Static IDentifier, SID, known also to the UE; and
first Network IDentifier, NID, for uniquely identifying the private network to the UE, wherein the first NID comprises the SID;
transceiver configured to:
broadcast the first NID;
controller configured to:
modify the first NID into a second, different, NID for uniquely identifying the private network (350), wherein the second NID is unfamiliar to the UE for the purposes of permitting the UE to request a connection to the private network on the basis of the second NID, and in which the second NID comprises:
the SID, wherein the SID remains unchanged as between the first and second NIDs; and
a Variable IDentifier, VID, consisting of at least one character that is different to a corresponding portion of the first NID; and
wherein the transceiver is configured subsequently to broadcast the second NID instead of the first NID, thereby instead to identify the private network using the second NID.

## Patentansprüche

1. Verfahren (300) zum Betreiben eines zellularen Telekommunikationssystems (100), wobei das System Benutzergeräte (105), UE, und ein zellulares privates Netzwerk (110-2) umfasst, und wobei das Verfahren die Schritte umfasst:
Speichern, am UE und im privaten Netzwerk, eines der folgenden:
statische Kennung, SID; und
erste Netzwerkkennung, NID, zum eindeutigen Identifizieren des privaten Netzwerks für das UE,
wobei die erste NID die SID umfasst;
durch das private Netzwerk:
Rundsenden der ersten NID;
Modifizieren der ersten NID in eine zweite, andere NID zum eindeutigen Identifizieren des privaten Netzwerks (350), wobei die zweite NID dem UE nicht bekannt ist, zu dem Zweck, dem UE zu erlauben, eine Verbindung zu dem privaten Netzwerk auf Basis der zweiten NID anzufordern, und wobei die zweite NID umfasst:
die SID, wobei die SID unverändert wie zwischen der ersten und der zweiten NID bleibt; und
eine variable Kennung, VID, bestehend aus mindestens einem Zeichen, das sich von einem entsprechenden Teil der ersten NID unterscheidet; und
anschließend Rundsenden der zweiten NID anstelle der ersten NID, wodurch stattdessen das private Netzwerk unter Verwendung der zweiten NID identifiziert wird;
durch das UE:
Detektieren der rundgesendeten zweiten NID (360);
Bestimmen, unter Verwendung der SID, dass die detektierte zweite NID die SID umfasst (330-2); und
Anfordern, als Reaktion auf das Bestimmen, dass die rundgesendete zweite NID die SID umfasst, einer Anbindung an das private Netzwerk unter Verwendung der SID, obwohl die zweite NID dem UE nicht bekannt ist (330-1).

2. Verfahren zum Betreiben von Benutzergeräten (105), UE, innerhalb eines zellularen Telekommunikationssystems (100), wobei das System ein zellulares privates Netzwerk (110-2) umfasst, und wobei das Verfahren die Schritte umfasst:
Speichern, am UE, eines der folgenden:
statische Kennung, SID; und
erste Netzwerkkennung, NID, zum eindeutigen Identifizieren des privaten Netzwerks für das UE,
wobei die erste NID die SID umfasst;
Detektieren, durch das UE, einer zweiten NID, wie sie durch das private Netzwerk rundgesendet wird, wobei die zweite NID zum eindeutigen Identifizieren des privaten Netzwerks dient, das Ergebnis einer Modifikation der ersten NID ist, und wobei die zweite NID dem UE nicht bekannt ist, zu dem Zweck, dem UE zu erlauben, eine Verbindung zu dem privaten Netzwerk auf Basis der zweiten NID anzufordern, und wobei die zweite NID umfasst:
die SID, wobei die SID unverändert wie zwischen der ersten und der zweiten NID bleibt; und
eine variable Kennung, VID, bestehend aus mindestens einem Zeichen, das sich von einem entsprechenden Teil der ersten NID unterscheidet; und
Bestimmen, unter Verwendung der SID, dass die detektierte zweite NID die SID umfasst (330-2); und
Anfordern, als Reaktion auf das Bestimmen, dass die rundgesendete zweite NID die SID umfasst, einer Anbindung an das private Netzwerk unter Verwendung der SID, obwohl die zweite NID dem UE nicht bekannt ist (330-1).

3. Verfahren zum Betreiben eines privaten zellularen Netzwerks (110-2) innerhalb eines zellularen Telekommunikationssystems (100), wobei das System Benutzergeräte (105), UE, umfasst, und wobei das Verfahren die Schritte umfasst:
Speichern, im privaten Netzwerk, eines der folgenden:
statische Kennung, SID, die auch dem UE bekannt ist; und erste Netzwerkkennung, NID, zum eindeutigen Identifizieren des privaten Netzwerks für das UE, wobei die erste NID die SID umfasst;
Rundsenden der ersten NID;
Modifizieren der ersten NID in eine zweite, andere NID zum eindeutigen Identifizieren des privaten Netzwerks (350), wobei die zweite NID dem UE nicht bekannt ist, zu dem Zweck, dem UE zu erlauben, eine Verbindung zu dem privaten Netzwerk auf Basis der zweiten NID anzufordern, und wobei die zweite NID umfasst:
die SID, wobei die SID unverändert wie zwischen der ersten und der zweiten NID bleibt; und
eine variable Kennung, VID, bestehend aus mindestens einem Zeichen, das sich von einem entsprechenden Teil der ersten NID unterscheidet; und
anschließend Rundsenden der zweiten NID anstelle der ersten NID, wodurch stattdessen das private Netzwerk unter Verwendung der zweiten NID identifiziert wird.

4. Verfahren nach einem der vorhergehenden Ansprüche, das ferner den Schritt umfasst:
vor dem Modifizieren der ersten NID bestimmt das private Netzwerk (110-2) eine Leistungseigenschaft des privaten Netzwerks, wobei das Modifizieren der ersten NID in eine zweite NID das Codieren der Leistungseigenschaft innerhalb der VID umfasst.

5. Verfahren nach Anspruch 4, wenn abhängig von Anspruch 1 oder 2, ferner den Schritt umfassend:
Decodieren, durch das UE (105), der codierten Leistungseigenschaft aus der VID, um dadurch die Leistungseigenschaft zu identifizieren, wobei das Anfordern des UE einer Anbindung an das private Netzwerk ferner als Reaktion darauf durchgeführt wird, dass das UE identifiziert, dass die Leistungseigenschaft eine vorbestimmte Schwelle überschreitet.

6. Verfahren nach Anspruch 5, wobei das Decodieren unter Verwendung eines in einem SIM des UE gespeicherten Chiffres durchgeführt wird (105).

7. Verfahren nach einem der Ansprüche 4 bis 6, wobei die Leistungseigenschaft mindestens eines von Folgendem umfasst: Bandbreite; Latenz, QoS, Jitter, Gastdienste, Roaming-Bedingungen und Service-Level-Zusicherungen.

8. Verfahren nach einem der vorhergehenden Ansprüche, wobei das private Netzwerk ein eigenständiges nicht-öffentliches Netzwerk, ein nicht-eigenständiges nicht-öffentliches Netzwerk oder ein in ein öffentliches Netzwerk integriertes nicht-öffentliches Netzwerk ist.

9. Verfahren nach einem der vorhergehenden Ansprüche, das ferner die Schritte umfasst:
im Anschluss an das Anfordern der Anbindung baut das UE (105) eine Verbindung mit dem privaten Netzwerk (110-2) auf; und
Anweisen, durch das private Netzwerk, des UE, folgende zu ersetzen:
die gespeicherte erste NID mit der zweiten NID;
die gespeicherte SID mit einer anderen SID, die ebenfalls durch das private Netzwerk gespeichert wird.

10. Verfahren nach einem der vorhergehenden Ansprüche, wobei die VID ferner ein Flag umfasst, um das UE (105) zu veranlassen, den Schritt des Bestimmens, unter Verwendung der SID, dass die detektierte zweite NID die SID (330-2) umfasst, durchzuführen.

11. Computerlesbares Trägermedium, das ein Computerprogramm umfasst, das, wenn das Computerprogramm von einem Computer ausgeführt wird, den Computer veranlasst, die Schritte nach einem der vorhergehenden Ansprüche auszuführen.

12. Zellulares Telekommunikationssystem (100), umfassend:
privates Mobilfunknetz (110-2); und
Benutzergerät (105), UE;
wobei das private Netzwerk ausgelegt ist zum:
Rundsenden einer ersten Netzwerkkennung, NID, zum eindeutigen Identifizieren des privaten Netzwerks für das UE;
Modifizieren der ersten NID in eine zweite, andere NID zum eindeutigen Identifizieren des privaten Netzwerks (350), wobei die zweite NID dem UE nicht bekannt ist, zu dem Zweck, dem UE zu erlauben, eine Verbindung zu dem privaten Netzwerk auf Basis der zweiten NID anzufordern, und wobei die zweite NID umfasst:
statische Kennung, SID, die unverändert wie zwischen der ersten und der zweiten NID ist; und
variable Kennung, VID, bestehend aus mindestens einem Zeichenfeld, das sich von einem entsprechenden Teil der ersten NID unterscheidet; und
anschließend Rundsenden der zweiten NID anstelle der ersten NID, wodurch stattdessen das private Netzwerk unter Verwendung der zweiten NID identifiziert wird; und
Benutzergerät, UE, umfassend:
Speicher, der speichert:
die erste NID, um dadurch eine Anbindung an das private Netzwerk zu identifizieren und durchzuführen, wenn das Netzwerk die erste NID rundsendet; und
die SID; und
eine Steuerung, die ausgelegt ist zum:
Detektieren der rundgesendeten zweiten NID;
Bestimmen, unter Verwendung der gespeicherten SID, dass die detektierte zweite NID die SID umfasst (330-2); und
Anfordern, als Reaktion auf das Bestimmen, dass die rundgesendete zweite NID die SID umfasst, einer Anbindung an das private Netzwerk unter Verwendung der gespeicherten SID (330-1).

13. Benutzergerät (105), UE, zum Betrieb innerhalb eines zellularen Telekommunikationssystems (100), das ein zellulares privates Netzwerk (110-2) umfasst, wobei das UE umfasst:
Speicher, der speichert:
statische Kennung, SID; und
erste Netzwerkkennung, NID, zum eindeutigen Identifizieren des privaten Netzwerks für das UE, wobei die erste NID die SID umfasst;
eine Steuerung, die ausgelegt ist zum:
Detektieren, durch das UE, einer zweiten NID, wie sie durch das private Netzwerk rundgesendet wird, wobei die zweite NID zum eindeutigen Identifizieren des privaten Netzwerks dient, das Ergebnis einer Modifikation der ersten NID durch das private Netzwerk ist, und wobei die zweite NID dem UE nicht bekannt ist, zu dem Zweck, dem UE zu erlauben, eine Verbindung zu dem privaten Netzwerk auf Basis der zweiten NID anzufordern, und wobei die zweite NID umfasst:
die SID, wobei die SID unverändert wie zwischen der ersten und der zweiten NID bleibt; und
eine variable Kennung, VID, bestehend aus mindestens einem Zeichen, das sich von einem entsprechenden Teil der ersten NID unterscheidet; und
Bestimmen, unter Verwendung der SID, dass die detektierte zweite NID die SID umfasst (330-2); und
Anfordern, als Reaktion auf das Bestimmen, dass die rundgesendete zweite NID die SID umfasst, einer Anbindung an das private Netzwerk unter Verwendung der SID, obwohl die zweite NID dem UE nicht bekannt ist (330-1).

14. Privates zellulares Netzwerk (110-2) zum Betreiben innerhalb eines zellularen Telekommunikationssystems (100), wobei das System Benutzergeräte (105), UE, umfasst, und wobei das private Netzwerk umfasst:
Speicher, der speichert:
statische Kennung, SID, die auch dem UE bekannt ist; und erste Netzwerkkennung, NID, zum eindeutigen Identifizieren des privaten Netzwerks für das UE, wobei die erste NID die SID umfasst;
Sendeempfänger, der ausgelegt ist zum:
Rundsenden der ersten NID;
Steuerung, die ausgelegt ist zum:
Modifizieren der ersten NID in eine zweite, andere NID zum eindeutigen Identifizieren des privaten Netzwerks (350), wobei die zweite NID dem UE nicht bekannt ist, zu dem Zweck, dem UE zu erlauben, eine Verbindung zu dem privaten Netzwerk auf Basis der zweiten NID anzufordern, und wobei die zweite NID umfasst:
die SID, wobei die SID unverändert wie zwischen der ersten und der zweiten NID bleibt; und
eine variable Kennung, VID, bestehend aus mindestens einem Zeichen, das sich von einem entsprechenden Teil der ersten NID unterscheidet; und
wobei der Sendeempfänger ausgelegt ist, anschließend die zweite NID anstelle der ersten NID rundzusenden, wodurch stattdessen das private Netzwerk unter Verwendung der zweiten NID identifiziert wird.

## Revendications

1. Procédé (300) d'exploitation d'un système (100) de télécommunications cellulaires, ledit système comprenant un équipement d'utilisateur, UE, (105), et un réseau privé cellulaire (110-2), et le procédé comprenant les étapes de :
stockage, au niveau de l'UE et du réseau privé, de :
un identifiant statique, SID ; et
un premier identifiant de réseau, NID, servant à identifier de manière unique le réseau privé vis-à-vis de l'UE,
le premier NID comprenant le SID ;
par le réseau privé :
diffusion du premier NID ;
modification du premier NID en un second NID différent servant à identifier de manière unique le réseau privé (350), le second NID n'étant pas familier à l'UE afin de permettre à l'UE de demander une connexion au réseau privé sur la base du second NID, et le second NID comprenant :
le SID, le SID restant inchangé entre les premier et second NID ; et
un identifiant variable, VID, constitué d'au moins un caractère différent d'une partie correspondante du premier NID ; et
diffusion subséquente du second NID au lieu du premier NID, pour ainsi identifier plutôt le réseau privé à l'aide du second NID ;
par l'UE :
détection du second NID (360) diffusé ;
détermination, à l'aide du SID, du fait que le second NID détecté comprend le SID (330-2) ; et
demande, en réponse à la détermination du fait que le second NID diffusé comprend le SID, de rattachement au réseau privé à l'aide du SID, bien que le second NID ne soit pas familier à l'UE (330-1).

2. Procédé d'exploitation d'un équipement d'utilisateur, UE, (105) dans un système (100) de télécommunications cellulaires, ledit système comprenant un réseau privé cellulaire (110-2), et le procédé comprenant les étapes de :
stockage, au niveau de l'UE, de :
un identifiant statique, SID ; et
un premier identifiant de réseau, NID, servant à identifier de manière unique le réseau privé vis-à-vis de l'UE,
le premier NID comprenant le SID ;
détection, par l'UE, d'un second NID, tel que diffusé par le réseau privé, le second NID étant destiné à identifier de manière unique le réseau privé, étant le résultat d'une modification du premier NID, et le second NID n'étant pas familier à l'UE afin de permettre à l'UE de demander une connexion au réseau privé sur la base du second NID, et le second NID comprenant :
le SID, le SID restant inchangé entre les premier et second NID ; et
un identifiant variable, VID, constitué d'au moins un caractère différent d'une partie correspondante du premier NID ; et
détermination, à l'aide du SID, du fait que le second NID détecté comprend le SID (330-2) ; et
demande, en réponse à la détermination du fait que le second NID diffusé comprend le SID, de rattachement au réseau privé à l'aide du SID, bien que le second NID ne soit pas familier à l'UE (330-1).

3. Procédé d'exploitation d'un réseau cellulaire privé (110-2) dans un système (100) de télécommunications cellulaires, ledit système comprenant un équipement d'utilisateur, UE, (105) et le procédé comprenant les étapes de :
stockage, au niveau du réseau privé, de :
un identifiant statique, SID, également connu de l'UE ; et
un premier identifiant de réseau, NID, servant à identifier de manière unique le réseau privé vis-à-vis de l'UE, le premier NID comprenant le SID ;
diffusion du premier NID ;
modification du premier NID en un second NID différent servant à identifier de manière unique le réseau privé (350), le second NID n'étant pas familier à l'UE afin de permettre à l'UE de demander une connexion au réseau privé sur la base du second NID, et le second NID comprenant :
le SID, le SID restant inchangé entre les premier et second NID ; et
un identifiant variable, VID, constitué d'au moins un caractère différent d'une partie correspondante du premier NID ; et
diffusion subséquente du second NID au lieu du premier NID, ce qui permet d'identifier le réseau privé à l'aide du second NID.

4. Procédé selon l'une quelconque des revendications précédentes, comprenant en outre l'étape de :
détermination par le réseau privé (110-2), avant de modifier le premier NID, d'une caractéristique de performance du réseau privé, la modification du premier NID en un second NID comprenant le codage de ladite caractéristique de performance dans le VID.

5. Procédé selon la revendication 4, lorsqu'elle dépend de la revendication 1 ou 2, comprenant en outre l'étape de :
décodage, par l'UE (105), de la caractéristique de performance codée à partir du VID pour identifier ainsi la caractéristique de performance, la demande par l'UE d'un rattachement au réseau privé étant en outre effectuée en réponse à l'identification par l'UE du fait que la caractéristique de performance dépasse un seuil prédéterminé.

6. Procédé selon la revendication 5, le décodage étant effectué en utilisant un chiffre stocké dans un SIM de l'UE (105).

7. Procédé selon l'une quelconque des revendications 4 à 6, la caractéristique de performance comprenant au moins l'un des éléments suivants : largeur de bande ; latence, QoS, gigue, services invités, conditions d'itinérance et garanties de niveau de service.

8. Procédé selon l'une quelconque des revendications précédentes, le réseau privé étant un réseau non public autonome, un réseau non public non autonome ou un réseau non public intégré à un réseau public.

9. Procédé selon l'une quelconque des revendications précédentes, comprenant en outre les étapes de :
établissement par l'UE (105), suite à la demande de rattachement, d'une connexion avec le réseau privé (110-2) ; et
injonction, par le réseau privé, à l'UE de remplacer :
le premier NID stocké par le second NID ;
le SID stocké par un SID différent qui est également stocké par le réseau privé.

10. Procédé selon l'une quelconque des revendications précédentes, le VID comprenant en outre un fanion pour déclencher la réalisation par l'UE (105) de l'étape de détermination, en utilisant le SID, du fait que le second NID détecté comprend le SID (330-2).

11. Support lisible par ordinateur comprenant un programme d'ordinateur qui, lorsque le programme d'ordinateur est exécuté par un ordinateur, amène l'ordinateur à réaliser les étapes selon l'une quelconque des revendications précédentes.

12. système (100) de télécommunications cellulaires comprenant :
un réseau privé cellulaire (110-2) ; et
un équipement d'utilisateur (105), UE ;
le réseau privé étant configuré pour :
diffuser un premier identifiant de réseau, NID, servant à identifier de manière unique le réseau privé vis-à-vis de l'UE ;
modifier le premier NID en un second NID différent pour identifier de manière unique le réseau privé (350), le second NID n'étant pas familier à l'UE afin de permettre à l'UE de demander une connexion au réseau privé sur la base du second NID, et le second NID comprenant :
un identifiant statique, SID, qui est inchangé entre les premier et second NID ; et
un identifiant variable, VID, constitué d'au moins un champ de caractères différent d'une partie correspondante du premier NID ; et
diffuser ensuite le second NID au lieu du premier NID, pour ainsi identifier plutôt le réseau privé à l'aide du second NID ; et
un équipement d'utilisateur, UE, comprenant :
une mémoire stockant :
le premier NID, afin d'identifier ainsi le réseau privé et d'effectuer un rattachement à celui-ci lorsque ledit réseau diffuse le premier NID ; et
le SID ; et
un contrôleur configuré pour :
détecter le second NID diffusé ;
déterminer, à l'aide du SID stocké, que le second NID détecté comprend le SID (330-2) ; et
demander, en réponse à la détermination du fait que le second NID diffusé comprend le SID, une connexion au réseau privé à l'aide du SID stocké (330-1).

13. équipement d'utilisateur (105), UE, destiné à fonctionner dans un système (100) de télécommunications cellulaires comprenant un réseau privé cellulaire (110-2), l'UE comprenant :
une mémoire stockant :
un identifiant statique, SID ; et
un premier identifiant de réseau, NID, servant à identifier de manière unique le réseau privé vis-à-vis de l'UE, le premier NID comprenant le SID ;
un contrôleur configuré pour :
faire détecter, par l'UE, un second NID, tel que diffusé par le réseau privé, le second NID étant destiné à identifier de manière unique le réseau privé, étant le résultat d'une modification du premier NID par le réseau privé, et le second NID n'étant pas familier à l'UE afin de permettre à l'UE de demander une connexion au réseau privé sur la base du second NID, et le second NID comprenant :
le SID, le SID restant inchangé entre les premier et second NID ; et
un identifiant variable, VID, constitué d'au moins un caractère différent d'une partie correspondante du premier NID ; et
déterminer, à l'aide du SID, que le second NID détecté comprend le SID (330-2) ; et
demander, en réponse à la détermination du fait que le second NID diffusé comprend le SID, un rattachement au réseau privé à l'aide du SID, bien que le second NID ne soit pas familier à l'UE (330-1).

14. Réseau cellulaire privé (110-2) destiné à fonctionner dans un système de télécommunications cellulaire (100), ledit système comprenant un équipement d'utilisateur, UE, (105) et le réseau privé comprenant :
une mémoire stockant :
un identifiant statique, SID, également connu de l'UE ; et
un premier identifiant de réseau, NID, servant à identifier de manière unique le réseau privé vis-à-vis de l'UE, le premier NID comprenant le SID ;
un émetteur-récepteur configuré pour :
diffuser le premier NID ;
un contrôleur configuré pour :
modifier le premier NID en un second NID différent pour identifier de manière unique le réseau privé (350), le second NID n'étant pas familier à l'UE afin de permettre à l'UE de demander une connexion au réseau privé sur la base du second NID, et le second NID comprenant :
le SID, le SID restant inchangé entre les premier et second NID ; et
un identifiant variable, VID, constitué d'au moins un caractère différent d'une partie correspondante du premier NID ; et
l'émetteur-récepteur étant configuré ultérieurement pour diffuser le second NID au lieu du premier NID, pour ainsi identifier plutôt le réseau privé à l'aide du second NID ;
